# EUROPÄISCHE PATENTANMELDUNG

(11) **EP 1 262 692 A2**
(43) Veröffentlichungstag der Anmeldung: **04.12.2002**
(21) Anmeldenummer: 02012163.8
(22) Anmeldetag: 03.06.2002
(51) Int. Cl.: F16H 63/30

(54) **Schaltgetriebe**

(30) Priorität: 01.06.2001 DE 10126971; 12.06.2001 DE 10128318
(71) Anmelder: GIF Gesellschaft für Industrieforschung mbH, 52477 Alsdorf (DE)
(72) Erfinder: Brandwitte, Werner, 52379 Langerwehe (DE); Quartier, Georg, 52080 Aachen (DE); Bartling, Tim, 52062 Aachen (DE)
(74) Vertreter: Castell, Klaus, Dr.-Ing.

(57) **Zusammenfassung**

Bei einem Schaltgetriebe mit einem schaltbaren Getriebestrang aus an einem Gestell (1) gelagerten Getriebegliedern (2) und mit einem Schalttrieb, durch welchen zum Schalten wenigstens zwei Getriebeglieder wahlweise in den Getriebestrang einbringbar sind, wobei die beiden Getriebeglieder über Schaltelemente (3) beweglich an einer Halterung des Gestells gelagert sind und wobei der Schalttrieb über einen Schaltstrang (4) zum Auswählen und/oder Ein- bzw. Auslegen eines der beiden Getriebeglieder auf die Schaltelemente (3) wirkt, können die Halterung ein gegenüber dem Gestell (1) beweglich angeordnetes Lagerelement (16) umfassen, welches Bestandteil des Schaltstranges ist, sowie eine Einlegesperre fest an dem Gestell angebracht und die Schaltelemente über einen axial geteilten Lagerkörper an der Halterung gelagert sein.

## Beschreibung

Die Erfindung betrifft ein Schaltgetriebe mit einem schaltbaren Getriebestrang aus an einem Gestell gelagerten Getriebegliedern und mit einem Schalttrieb, durch welchen zum Schalten wenigstens zwei Getriebeglieder wahlweise in den Getriebestrang einbringbar sind. Hierbei sind die beiden Getriebeglieder über Schaltelemente beweglich an einer Halterung des Gestells gelagert, und der Schalttrieb wirkt über einen Schaltstrang zum Auswählen und/oder Ein- bzw. Auslegen eines der beiden Getriebeglieder auf die Schaltelemente.

Derartige Schaltgetriebe sind hinlänglich als übliche Schaltgetriebe bekannt, wobei die Getriebeglieder bei derartigen, bekannten Schaltgetrieben üblicherweise Zahnräder sind, über welche geeignete Übersetzungsverhältnisse realisiert werden. Diese Schaltgetriebe weisen wenigstens zwei Zahnräder auf, welche wahlweise in den jeweiligen Antriebsstrang bzw. Getriebestrang, als in die Kraft- bzw. Wirkkette des Getriebes, geschaltet werden können. Um einen derartigen Schaltvorgang zuverlässig durchführen zu können, sind die schaltbaren Zahnräder jeweils an Schaltgabeln gelagert, welche auf einer bezüglich des Gestells ortsfesten Achse verschiebbar gelagert sind und von dieser Achse gehalten werden.

Die Schaltgabeln weisen darüber hinaus Ausnehmungen oder ähnliche Einrichtungen auf, in welche eine Schaltfeder eingreifen kann, die über einen Schaltstrang, wie geeignete Züge oder ähnliches, mit einem Schalttrieb, wie beispielsweise einem Schaltknüppel, wirkverbunden sind. Wird der Schaltknüppel betätigt, so legt die Schaltfeder, welche über den Schaltstrang entsprechend betätigt wird, eine entsprechende Schaltgabel fest, welche dann den gewählten Gang einlegt. Um eine ausreichende Betriebssicherheit zu gewährleisten, umfasst die Schaltfeder auch eine sich mitbewegende Einlegesperre, welche verhindert, dass nicht gewählte Gänge eingelegt werden.

Es ist Aufgabe vorliegender Erfindung, ein Schaltgetriebe bereitzustellen, welches platzsparender baut.

Als Lösung schlägt die Erfindung ein gattungsgemäßes Schaltgetriebe vor, bei welchem die Halterung der Schaltelemente ein gegenüber dem Gestell beweglich angeordnetes Lagerelement umfasst, welches Bestandteil des Schaltstranges ist.

Insofern geht die Erfindung von der erfinderischen Grundidee aus, auf eine separate Halterung für die Schaltelemente zu verzichten und die Halterung über die ohnehin vorzusehenden Elemente des Schaltstranges, wie bspw. die Feder bzw. eine in ihrer Wirkung ähnliche, neue Baugruppe, vorzunehmen. Durch diesen Verzicht baut das erfindungsgemäße Schaltgetriebe platzsparender. Statt eines Verzichtes kann jedoch diese Grundidee auch dadurch umgesetzt werden, dass durch das erfindungsgemäße Lagerelement, welches Bestandteil des Schaltstranges ist, übrige Lagerelemente weniger aufwändig bzw. stabil und somit kleiner gewählt werden können. Dieses ermöglicht es, einen Schaltdom, in welchem die Elemente des Schaltstranges üblicherweise angeordnet sind, an mehr Stellen unterzubringen als dieses bei herkömmlichen Schaltgetrieben möglich ist, da der Schaltdom bei einem erfindungsgemäßen Schaltgetriebe wesentlich kleiner baut. Auf diese Weise kann bspw. der Schaltdom auch bei beengten und ungünstigen Platzverhältnissen auf einer von einem Fahrer bzw. von Insassen abgewandten Seite des Getriebes vorgesehen werden, wodurch die Sicherheit erhöht wird.

In vorliegendem Zusammenhang umfasst ein "Schaltstrang" alle zur Gangund Gassenwahl antreibend wirksamen Glieder.

Bei einer bevorzugten Ausführungsform erfolgt die Lagerung des jeweilige Schaltelementes an dem Lagerelement derart, dass ein zu schaltendes Schaltelement und das Lagerelement gemeinsam bewegt werden, wenn ein Schaltvorgang mit diesem Schaltelement vorgenommen wird. Bei einer derartigen Anordnung braucht lediglich das Lagerelement in der Lage zu sein, unter Last gegenüber dem Gestell verlagert zu werden. Insofern braucht lediglich die Lagerung des Lagerelementes an dem Gestell entsprechend ausgeformt zu werden, während die Lagerung der Schaltelemente an dem Lagerelement nur wesentlich geringeren Anforderungen genügen muss, da die Schaltelemente nur lastfrei gegenüber dem Lagerelement verlagert werden. Insofern kann die Anordnung wegen der Möglichkeit, kleinere Lager zu verwenden, entsprechend kleiner bauen. Darüber hinaus sind derartige Lager auch kostengünstiger. Es versteht sich, dass eine derartige Ausgestaltung auch unabhängig von den übrigen Merkmalen vorliegender Erfindung vorteilhaft ist.

In einer bevorzugten Ausführungsform kann das Schaltgetriebe wenigstens ein Verbindungselement zwischen dem Lagerelement und einem der Schaltelemente umfassen. Hierbei weist das Verbindungselement vorzugsweise wenigstens zwei Positionen, eine erste Schaltposition, in welcher es das Schaltelement bezüglich des Lagerelementes fixiert und bezüglich des Gestells freigibt, und eine zweite Sperrposition, in welcher es das Schaltelement bezüglich des Lagerelementes freigibt und bezüglich des Gestells fixiert, auf und ist in diese beiden Positionen verlagerbar. Auf diese Weise kann besonders einfach und platzsparend realisiert werden, dass das Schaltelement gemeinsam mit Lagerelement bewegt wird, wenn dieses Schaltelement geschaltet wird. Die räumliche Nähe zwischen Lagerelement und Verbindungselement ermöglicht es darüber hinaus, das Verbindungselement unmittelbar durch das Lagerelement anzusprechen. Auf diese Weise erfüllen das Verbindungselement bzw. die Verbindungselemente drei Aufgaben. Zum einen kann durch Wahl eines bestimmten Schaltelementes eine bestimmte Gasse gewählt werden. Zum zweiten können die anderen Schaltelemente, indem für diese nicht gewählten Schaltelemente die Sperrposition gewählt wird, festgelegt werden. Drittens ermöglicht die Fixierung des Schaltelements und des Lagerelements, dass das Schaltelement und das Lagerelement, welches Bestandteil des Schaltstranges ist, gemeinsam bewegt und somit der Gang ein- bzw. ausgelegt werden kann.

Es versteht sich, dass statt des erfindungsgemäßen Lagerelements ein derartiges Verbindungselement, welches zwischen einer Schaltposition und einer Sperrposition, wie sie vorstehend beschrieben sind, wechseln kann, auch mit einem herkömmlichen Glied des Schaltstranges entsprechend wechselwirken und die vorstehend beschriebenen, baulichen Vorteile umsetzen kann.

Dementsprechend ist das Verbindungselement vorzugsweise durch das Lagerelement als Bestandteil des Schaltstranges zwischen Schaltposition und Sperrposition verlagerbar. Es versteht sich, dass die Tatsache, dass das Verbindungselement Bestandteil des Schaltstranges ist, auch unabhängig von dessen beiden Positionen und der Verlagerbarkeit des Verbindungselementes vorteilhaft ist.

Das Verbindungselement kann besonders einfach und somit kostengünstig bereitgestellt werden, wenn hierfür ein Federelement zur Anwendung kommt, welches durch das Lagerelement in die Schaltposition bzw. in die Sperrposition verlagerbar ist. Durch die federnden Eigenschaften ist es möglich, die Anordnung derart auszugestalten, dass das Lagerelement für die Positionsverlagerung jeweils nur eine Kraftrichtung aufbringen muss, während die Rückverlagerung durch das Federelement selbst erfolgt.

In vorliegendem Zusammenhang bezeichnet der Begriff "fixieren", dass das Verbindungselement das Schaltelement derart bezüglich einer dritten Baugruppe festlegt, dass der für ein Einlegen oder Auslegen notwendige Freiheitsgrad des Schaltelements entsprechend festgelegt wird. Dem Schaltelement können andere Freiheitsgrade belassen werden.

Es versteht sich, dass die gemeinsame Bewegung zwischen zu schaltendem Schaltelement und Lagerelement und/oder das Vorhandensein des Verbindungselementes auch unabhängig von den übrigen Merkmalen des Schaltgetriebes vorteilhaft ist. Einerseits erfolgt hierdurch eine bauliche Vereinfachung der Gesamtanordnung und eine dementsprechende Kostenreduktion. Andererseits bedingt diese Bauteilreduktion auch, dass hierdurch die Zuverlässigkeit der Gesamtanordnung erhöht wird.

Als weitere Lösung schlägt die Erfindung ein gattungsgemäßes Schaltgetriebe vor, bei welchem eine fest an dem Gestell angebrachte Einlegesperre für die Schaltelemente vorgesehen ist. Auch eine derartige Anordnung baut wesentlich platzsparender als bekannte Anordnungen. Durch die Einlegesperre können die übrigen Schaltelemente ortsfest gegenüber dem Gestell gehalten werden, so dass die nicht zu schaltenden Schaltelemente, welche demnach auch nicht belastet werden, gegenüber dem oder den Lagerelementen verlagert werden.

Darüber hinaus erhöht die ortsfest vorgesehene Einlegesperre die Zuverlässigkeit der Gesamtanordnung, da auf eine bewegte Baugruppe verzichtet werden kann.

In einer bevorzugten Ausgestaltung ist die Einlegesperre ein an dem Gestell angebrachter Bügel. Eine derartige Einlegesperre baut äußerst einfach und ist somit leicht zu montieren sowie kostengünstig.

Vorzugsweise weist die Einlegesperre ortsfest bezüglich des Gestells vorhandene Formschlusselemente auf, mit welchen komplementäre Formschließer wechselwirken, welche die jeweiligen nicht ausgewählten Schaltelemente über einen Formschluss bezüglich des Gestells festlegen. Es versteht sich, dass dieser Formschluss lediglich den Freiheitsgrad bzw. diejenigen Freiheitsgrade festlegen braucht, durch welche ein Schaltelement ein unbeabsichtigtes Gangeinlegen bewirken könnte. Durch derartige Formschlusselemente, die beispielsweise durch Nuten, Ausnehmungen oder Erhebungen gebildet werden können, kann eine fest an dem Gestell angebrachte Einlegesperre besonders einfach und kostengünstig realisiert werden.

Ein beweglich angeordnetes Lagerelement, welches Bestandteil des Schaltstranges ist, lässt sich auf baulich besonders einfache Weise realisieren, wenn als Lagerelement eine Schaltwelle zur Anwendung kommt. Nach dem Stand der Technik sind die Schaltelemente auf einer Achse bezüglich des Gestells gelagert, während sämtliche Bewegungen der Schaltelemente über separate Baugruppen initialisiert wird. Bei der Verwendung einer Schaltwelle werden bei einem Schaltvorgang Kräfte über die Welle geleitet. Dieses können beispielsweise Schaltkräfte sein, so dass die Schaltwelle Bestandteil des Schaltstranges ist. Unabhängig von den übrigen Merkmalen der Erfindung kann das Vorhandensein einer kraftübertragenden Welle, über welche möglicher Weise auch sonstige Bewegungen initialisiert werden und an welcher wenigstens ein Schaltelement gelagert ist, für eine Reduktion der Zahl von Bauteilen vorteilhaft sein.

Es versteht sich, dass über die Schaltwelle einerseits Rotationskräfte aber auch andererseits axiale Kräfte übertragen werden können.

Vorzugsweise ist die Schaltwelle durch ein Gleitlager an dem Gestell bzw. an einer Lagerbuchse des Gestells gelagert. Eine derartige Lagerung baut verhältnismäßig kostengünstig und hat darüber hinaus den Vorteil, dass ohne Weiteres sowohl axiale Bewegungen als auch rotierende Bewegungen der Schaltwelle möglich sind.

Vorzugsweise wird die Schaltwelle zum Betätigen eines Schaltelements axial mit dem jeweiligen Schaltelement verbunden. Auf diese Weise können die notwendigen Schaltkräfte ohne Weiteres auf das Schaltelement übertragen werden. Darüber hinaus entspricht eine axiale Verlagerung des Schaltelements der an sich bekannten Schaltelementverlagerung auf einer Lagerachse, so dass diesbezüglich eine konstruktive Umsetzung vorliegender Erfindung äußerst einfach erfolgen kann.

Die Gesamtanordnung gestaltet sich konstruktiv besonders einfach, wenn diese Verbindung zwischen Schaltwelle und Schaltelement über einen Formschluss erfolgt. Insbesondere kann ein derartiger Formschluss ohne Weiteres gelöst bzw. geschlossen werden, um ein Schaltelement auszuwählen.

Mittels einer derartigen, axialen Verlagerung kann vorzugsweise ein entsprechend ausgewählter Gang über ein ausgewähltes Schaltelement eingelegt bzw. ausgelegt werden.

Insbesondere für eine Gassenwahl, wie diese auch bei herkömmlichen Schaltgetrieben vorgesehen ist, kann die Schaltwelle mit dem Schalttrieb drehantriebsverbunden sein. Durch einen derartigen Drehantrieb kann auf einfache Weise eine synchronisierte Bewegung an die auf der Schaltwelle gelagerten Schaltelemente gegeben werden. Die Synchronisation erfolgt hierbei durch die Schaltwelle selbst. So können durch eine derartige Drehbewegung beispielsweise verschiedene Schaltelemente in erfindungsgemäßer Weise ausgewählt werden. Eine derartige Auswahl entspräche einer Gassenwahl bei bisher bekannten Schaltgetrieben.

Vorzugsweise umfasst die Schaltwelle ein Antriebsrad, insbesondere ein Zahnrad, welches von dem Schalttrieb angetrieben ist, um einen entsprechenden Drehantrieb der Schaltwelle zu gewährleisten.

Dementsprechend kann der Schaltstrang eine Zahnstange umfassen, welche mit dem Zahnrad wirkverbunden ist, wobei die Zahnstange über einen Zug, der vorzugsweise in einer Ausnehmung oder ähnliches der Zahnstange eingreift, mit dem Schalttrieb wirkverbunden ist. Bei einer derartigen Anordnung lässt sich die erfindungsgemäße Drehantriebsverbindung zwischen Schaltwelle und Schalttrieb ohne Weiteres in bestehende Schaltgetriebe integrieren, da bekannte Schaltgetriebe ebenfalls über einen derartigen Schaltzug verfügen.

Die Schaltkräfte können andererseits auch vorteilhaft über zwei Zahnräder, die beispielsweise durch eine Nut-Feder-Verbindung oder durch eine Nut eines Zahnrades, in welche das andere Zahnrad eingreift, axial formschlüssig wirkverbunden sind, übertragen werden.

Die Verwendung einer Zahnstange bzw. die vorbeschriebenen zwei Zahnräder in dem Schaltstrang sind auch unabhängig von den übrigen Merkmalen vorliegender Erfindung vorteilhaft, da hierdurch Schaltkräfte rutsch- und somit betriebssicher übertragen werden können.

Die Möglichkeit, die Schaltwelle axial zu verlagern, kann insbesondere zum Einlegen oder Auslegen eines Getriebegliedes bzw. eines Ganges genutzt werden. Hierbei bedingt insbesondere die Verlagerbarkeit um zwei Freiheitsgrade - axial und rotierend bezüglich der Wellenachse - eine vorteilhafte Bauteilreduktion, da mittels einer Baugruppe zwei verschiedene Bewegungsabläufe initialisiert werden können.

Insofern wird vorliegend kumulativ bzw. alternativ die erfinderische Grundidee verwirklicht, in einem Schaltstrang, insbesondere zur Bauteilreduktion, die Kraftstränge für Gang- und Gassenwahl schon vor den Schaltgabeln oder ähnlichen, die Getriebeglieder bzw. Zahnräder des Getriebes führenden Schaltgliedern zusammenzuführen und ggf. wieder zu separieren. So können beispielsweise durch die Schaltwelle und/oder die axial formschlüssige Verbindung zwischen einer Zahnstange und einem Zahnrad bzw. zwischen zwei Zahnrädern Bauteile und somit Platz eingespart werden.

Eine konstruktiv einfache Umsetzung eines axialen Antriebs für die Schaltwelle lässt sich realisieren, wenn der Schaltstrang einen Hebel umfasst, der in den axialen Antrieb für die Schaltwelle eingreift. Vorzugsweise umfasst der axiale Antrieb einen axialen Formschluss zwischen der Schaltwelle und dem Hebel, so dass die notwendigen Kräfte ohne Weiteres übertragen werden können. Ein derartiger axialer Formschluss kann beispielsweise dadurch realisiert werden, dass eine Zahnstange des Schaltstrangs, in welche der Hebel eingreift, ein Zahnrad der Schaltwelle zur Bildung des axialen Formschlusses axial bezüglich der Schaltwelle umgreift. Auf diese Weise kann die axiale Bewegung des Hebels und eine Drehbewegung mittels des Zahnrades auf die Schaltwelle übertragen werden.

Der Hebel ist vorzugsweise über einen Ansatz mit dem Schalttrieb, insbesondere über einen entsprechenden Schaltzug, antriebsverbunden, so dass auch dieser Hebel ohne Weiteres in bestehende Schaltgetriebeanordnungen integriert werden kann. Es versteht sich, dass die Verwendung eines derartigen Hebels in dem Schaltstrang, mittels dessen insbesondere ein Einlegen bzw. Auslegen eines Ganges bewirkt wird, auch unabhängig von den übrigen Merkmalen vorliegender Erfindung vorteilhaft ist.

Im übrigen kann auch, um ein automatisiertes Getriebe bereitzustellen, ein motorischer Antrieb vorgesehen sein. Dieser kann beispielsweise unmittelbar auf die Schaltwelle wirken, indem durch einen ersten Motor eine Axialbewegung und durch einen zweiten Motor eine Drehbewegung der Schaltwelle initialisiert wird. Vorzugsweise können die Schaltkräfte, insbesondere aus Platzgründen, zunächst jedoch auf ein Schaltglied zusammengeführt und dann auf die Schaltwelle übertragen werden. Dieses kann beispielsweise durch ein zuvor beschriebenes Zahnrad umgesetzt sein. Insbesondere ist es vorteilhaft, die beiden motorischen Antrieb an einem separaten Gestelle zu befestigen. Insbesondere das Schaltglied, an welchem die Schaltkräfte zusammengeführt werden, sollte vorzugsweise ebenfalls an diesem Gestell gelagert sein. Diese Anordnung ermöglicht es, den motorischen Antrieb separat vorzumontieren und in einem Arbeitsgang an dem übrigen Getriebe zu befestigen. Im übrigen brauchen die Befestigungsmittel, durch welche das Gestell an dem übrigen Getriebe befestigt wird, lediglich in der Lage zu sein, die Schaltkräfte zu kompensieren, während durch die motorischen Antriebe und sonst wie bedingte Kräfte durch das Gestell kompensiert werden können. Es versteht sich, dass eine derartige Umsetzung eines automatisierten Getriebes auch unabhängig von den übrigen Merkmalen vorliegender Erfindung vorteilhaft ist.

In dem Schaltgetriebe kann der Schaltstrang mit einer Einrichtung zur Variation von Reaktionskräften in dem Schalttrieb wirkverbunden sein. Eine derartige Variationseinrichtung kann insbesondere dazu genutzt werden, dass ein Schaltknüppel des Schalttriebes mit einem bestimmten Kraftprofil bedient werden kann. Dieses Kraftprofil kann beispielsweise derart ausgelegt sein, dass der Schaltknüppel vorzugsweise in der Gasse des dritten und vierten Ganges eine Ruhelage aufweist, wie dieses bei Schaltgetrieben nach dem Stand der Technik der Fall ist. Ebenso können die Kräfte zum Erreichen der übrigen Gassen entsprechend variiert werden. Dieses gilt insbesondere zum Einlegen des Rückwärtsganges.

Es versteht sich, dass eine derartige Variationseinrichtung unabhängig von den übrigen Merkmalen vorliegender Erfindung vorteilhaft ist und auch im Zusammenspiel mit anderen Schalttrieben, als den bekannten Ganghebeln, vorteilhaft zur Anwendung kommen kann. Insbesondere können durch eine derartige Variationseinrichtung auch durch die Schaltelemente aufgebrachte Kräfte kompensiert werden, wenn beispielsweise ein motorischer Schalttrieb zur Anwendung kommt.

Eine konkrete Ausgestaltung der Variationseinrichtung kann beispielsweise einen in Abhängigkeit von einer Position des Schalttriebs angesteuerten Kraftspeicher umfassen. Ein derartiger Kraftspeicher kann insbesondere ein federelastisches Element aufweisen und - auch unabhängig von den übrigen Merkmalen vorliegender Erfindung - vorteilhaft dazu genutzt werden, um im übrigen Schalttrieb herrschende bzw. von den Schaltelementen aufgebrachte Kräfte zu kompensieren.

In baulich einfacher Weise lässt sich eine derartige Variationseinrichtung realisieren, in dem diese ein Kulisse und einen Kulissenfolger umfasst, wobei der Kulissenfolger entsprechend einer Verlagerung im Schaltstrang der Kulisse folgt und bedingt durch die Kulissenbahn in gewünschter Weise Reaktionskräfte in den Schalttrieb einspeisen kann. Insbesondere kann die Kulisse an einer Zahnstange des Schaltstranges und der Kulissenfolger in dem Gestell des Schaltgetriebes vorgesehen sein, so dass die Gesamtanordnung verhältnismäßig einfach baut. Es versteht sich, dass diese baulichen Verhältnisse auch umgegehrt vorgesehen sein können.

Als weitere Lösung schlägt die Erfindung ein gattungsgemäßes Schaltgetriebe vor, bei welchem axial beweglich bezüglich der Halterung angeordnete Schaltelemente über einen axial geteilten Lagerkörper, wie eine Lagerbuchse, an der Halterung gelagert sind.

Insbesondere können von wenigstens zwei Schaltelementen die Lagerkörper ineinander verschachtelt angeordnet sein. Durch eine derartige Bauweise lässt sich die Lagerlänge verlängern, so dass einem Verkanten wirkungsvoll entgegen gewirkt werden kann. Insbesondere können die Lagerkörper geteilte Lagerflächen aufweisen, die vorzugsweise ineinander verschachtelt sind.

Die Lagerung der Schaltelemente an der Halterung bzw. an einem Lagerelement gestaltet sich besonders einfach, wenn wenigstens ein Schaltelement über ein Gleitlager an der Halterung bzw. an einem Lagerelement gelagert ist. Insbesondere ist ein derartiges Gleitlager verhältnismäßig kostengünstig. Darüber hinaus werden, wie bereits vorstehend erläutert, die Lager zwischen Schaltelement und Lagerelement lediglich in unbelastetem Zustand beansprucht, so dass eine Lagerbelastung minimiert ist. Diese Anordnung ermöglicht somit auch die Verwendung verhältnismäßig kostengünstiger Lagermaterialien. Hierbei versteht es sich, dass derartige Gleitlager auch unabhängig von den übrigen Merkmalen der Erfindung vorteilhaft sind, insbesondere da derartige Gleitlager in unbelastetem Zustand auch kleinere Verkantungen problemlos ausgleichen können. Dies gilt insbesondere im Zusammenspiel mit axial geteilten Körpern.

Diese Anordnung ist insbesondere dann von Vorteil, wenn mehrere Schaltelemente auf einem Lagerelement angeordnet sind, so dass die Gesamtkosten für aufwendige Lagerungen reduziert werden können, da eine aurwendige Lagerung lediglich für dieses Lagerelement und nicht für alle Schaltelemente vorgesehen werden braucht.

Weitere Vorteile, Ziele und Eigenschaften vorliegender Erfindung wird anhand der Beschreibung anliegender Zeichnung erläutert, in welcher beispielhaft ein erfindungsgemäßes Schaltgetriebe dargestellt ist. In der Zeichnung zeigen:
- Fig. 1: eine perspektivische Ansicht einer Anordnung aus Schaltwelle, Schaltelementen und Schaltstrang eines erfindungsgemäßen Schaltgetriebes;
- Fig. 2: eine hinsichtlich der Schaltwelle geschnittene, perspektivische Ansicht zweier ineinander verschachtelter Lagerbuchsen zweier Schaltelemente des Schaltgetriebes nach Fig. 1;
- Fig. 3: eine andere Perspektive der in Fig. 2 dargestellten Anordnung;
- Fig. 4: eine Seitenansicht der in Fign. 2 und 3 dargestellten Anordnung;
- Fig. 5: einen Schnitt durch zwei Schaltelemente des Schaltgetriebes nach Fig. 1;
- Fig. 6: eine perspektivische Ansicht des Schnitts nach Fig. 5;
- Fig. 7: eine andere Perspektive des Schnitts nach Fig. 5;
- Fig. 8: eine Frontansicht des Schaltgetriebes nach Fig. 1;
- Fig. 9: eine Seitenansicht des Schaltgetriebes nach Fig. 1;
- Fig. 10: einen Schnitt entlang der Linie X-X in Fig. 9;
- Fig. 11: eine Seitenansicht der Schaltwelle und zweier Schaltelemente des Schaltgetriebes nach Fig. 1;
- Fig. 12: einen Schnitt entlang der Linie XII-XII in Fig. 11;

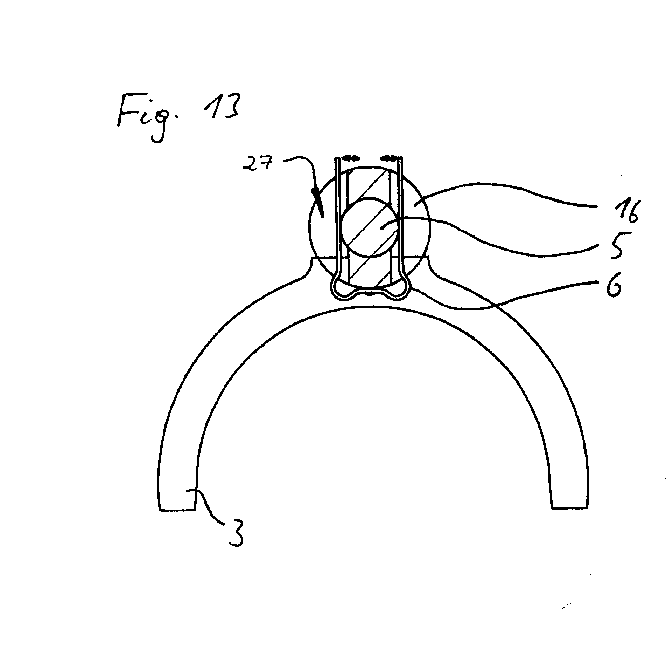

- Fig. 13: einen Schnitt entlang der Linie XIII-XIII in Fig. 11;
- Fig. 14: eine Frontansicht von Baugruppen des Schaltstranges des Schaltgetriebes nach Fig. 1;

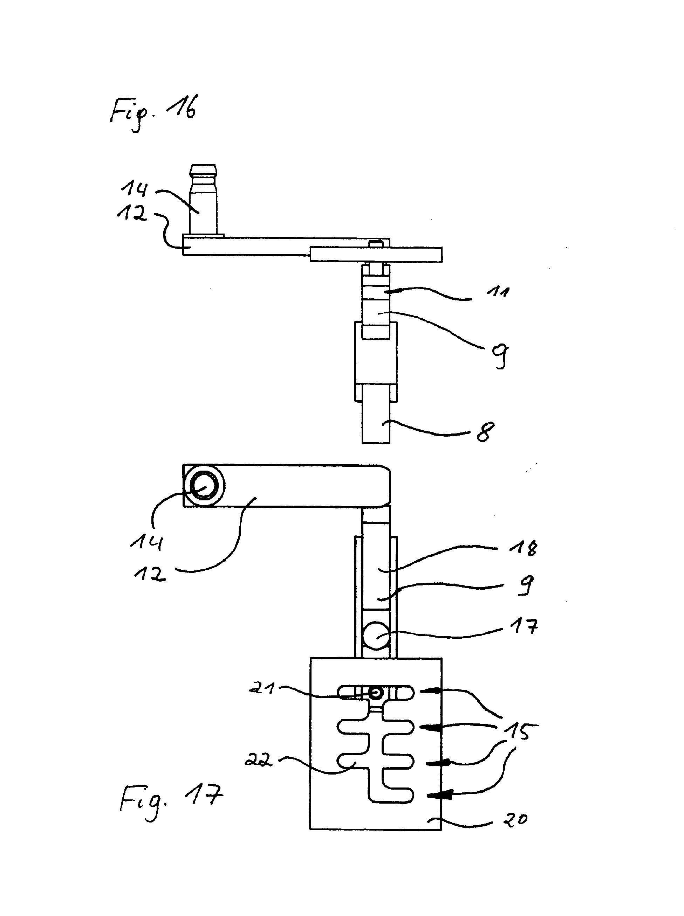

- Fig. 15: eine perspektivische Ansicht der in Fig. 14 dargestellten Anordnung;

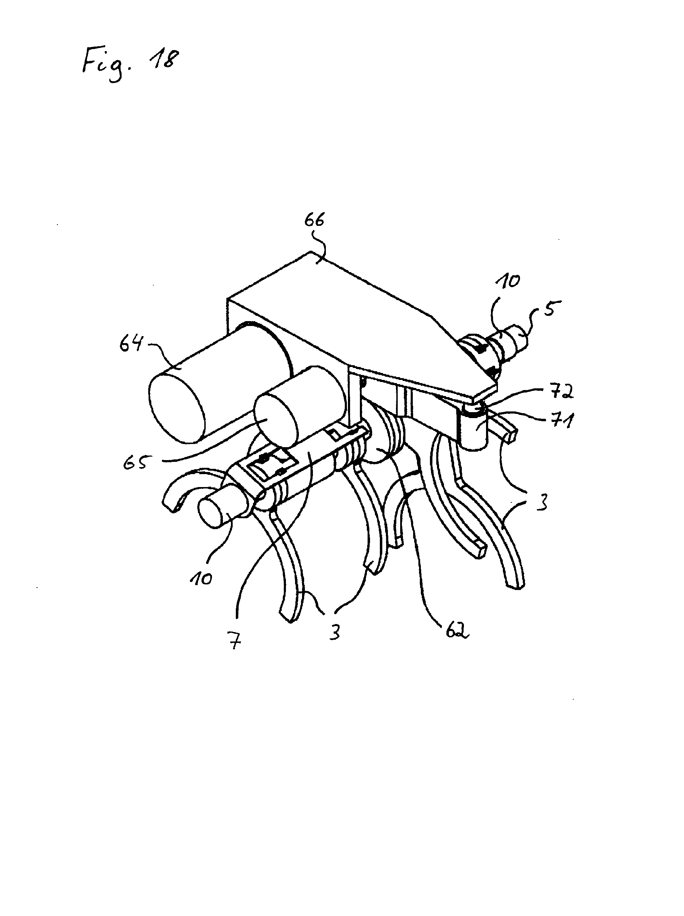

- Fig. 16: eine Seitenansicht der in Fig. 14 dargestellten Anordnung;
- Fig. 17: eine Aufsicht auf die in Fig. 14 dargestellten Anordnung;
- Fig. 18: eine Ansicht eines zweiten erfindungsgemäßen Schaltgetriebes in ähnlicher Darstellung wie Fig. 1;
- Fig. 19: das Schaltgetriebe nach Fig. 18 bei geöffnetem Gehäuse;
- Fig. 20: eine perspektivische Schnittdarstellung des Schaltgetriebes nach Fign. 18 und 19 durch die Schaltwelle;
- Fig. 21: eine perspektivische Schnittdarstellung des Schaltgetriebes nach Fign. 18 und 19 durch das Gestell;
- Fig. 22: eine Ansicht eines dritten erfindungsgemäßen Schaltgetriebes in ähnlicher Darstellung wie Fig. 1;
- Fig. 23: eine perspektivische, teilweise aufgebrochene Darstellung der Anordnung nach Fig. 22;
- Fig. 24: eine Ausschnittsvergrößerung der Darstellung in Fig. 23;
- Fig. 25: die Anordnung nach Fig. 1 in ihrer Einbauposition bezüglich einer Haupt- und einer Vorlegewelle eines Schaltmuffengetriebes;
- Fig. 26: eine perspektivische Ansicht von an einem Gestell gelagerten Getriebegliedern eines Schaltmuffengetriebes nach Fig. 25; und
- Fig. 27: eine schematische Darstellung des Antriebsstranges eines Kraftfahrzeuges.

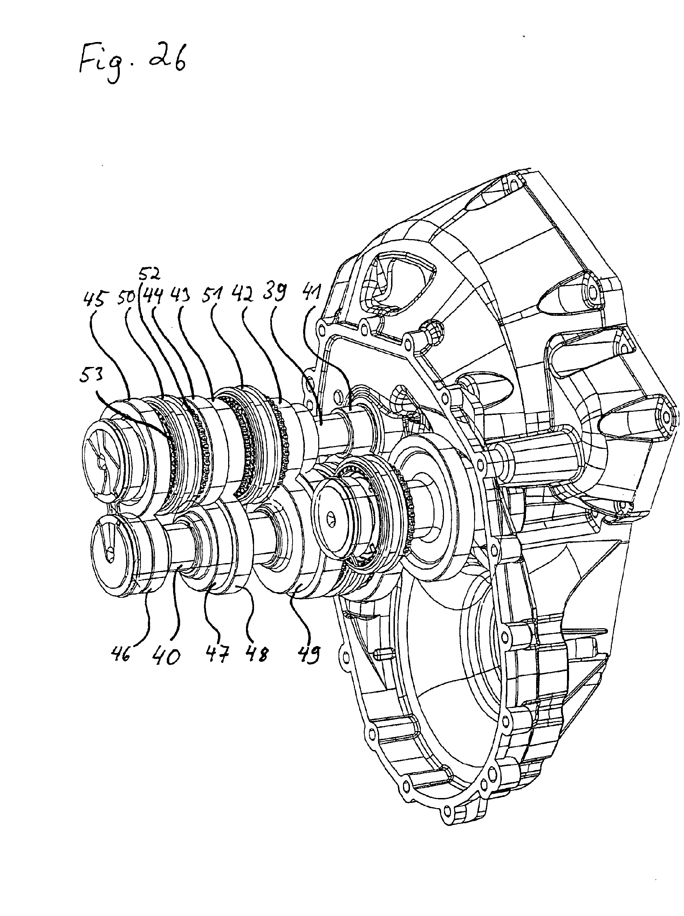

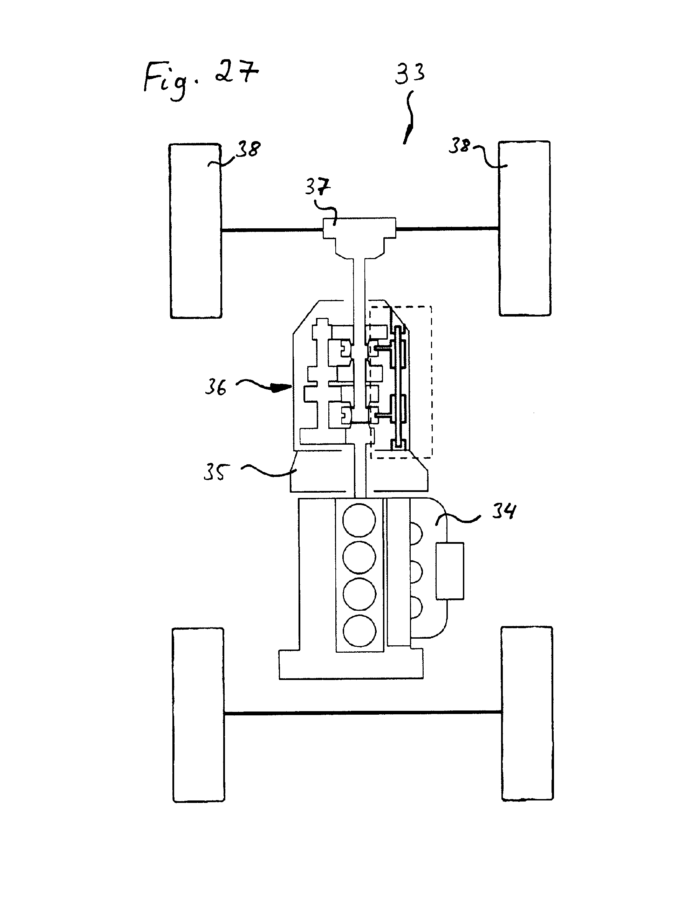

Das in den Figuren dargestellte Schaltgetriebe umfasst einen schaltbaren Getriebestrang aus an einem Gestell 1 gelagerten Getriebeglieder 2, wie dieses in Figur 26 beispielhaft anhand eines Schaltmuffengetriebes dargestellt ist. Durch den Getriebestrang, welcher bei vorliegendem Ausführungsbeispiel in den Antriebsstrang eines Kraftfahrzeuges 33 entsprechend Fig. 27, bei welchem von einem Motor 34 über eine Kupplung 35 sowie weitere, nicht dargestellte Elemente des Antriebsstranges ein Getriebe 36 und durch dieses über ein Differential 37 Antriebsräder 38 eines Kraftfahrzeuges 33 angetrieben werden können, eingeordnet ist, können Drehmomente bzw. Rotationsgeschwindigkeiten in bekannter Weise beeinflusst werden, indem wenigstens zwei Getriebeglieder 2 bzw. Zahnräder wahlweise in den Getriebestrang eingebracht werden. Bei vorliegendem Ausführungsbeispiel handelt es sich hierbei um insgesamt sechs Vorwärtsgänge und einen Rückwärtsgang, wobei, wie in Fig. 26 dargestellt, das Getriebe beispielsweise eine Hauptwelle 39 und eine Vorgelegewelle 40 umfasst, auf denen Gangräder 41 bis 45 (beispielhaft beziffert) bzw. Vorgelegeräder 46 bis 49 (beispielhaft beziffert) vorgesehen sind. Gang- und Vorgelegeräder 41 bis 49 kämmen ständig, wobei über Schaltmuffen 50, 51, welche nicht dargestellte, drehfest auf der Hauptwelle 39 gelagerte Führungsmuffen umgreifen, die Gangräder 41 bis 45 wahlweise auf der Hauptwelle 39 festgelegt werden können, indem die entsprechende Schaltmuffe 50, 51 axial verlagert wird. Bei einer derartigen Verlagerung erfolgt zunächst eine Synchronisation, bevor die Schaltmuffe, welche mit der entsprechenden Führungsmuffe kämmt auch mit dem entsprechenden Schaltkranz 52 bis 54 (exemplarisch beziffert) des entsprechenden Gangrades in Eingriff gerät und somit dieses Gangrad auf der Hauptwelle 39 festlegt und den entsprechenden Gang einlegt. Durch Rückbewegung der entsprechenden Schaltmuffe 50, 51 wird der entsprechende Gang ausgelegt.

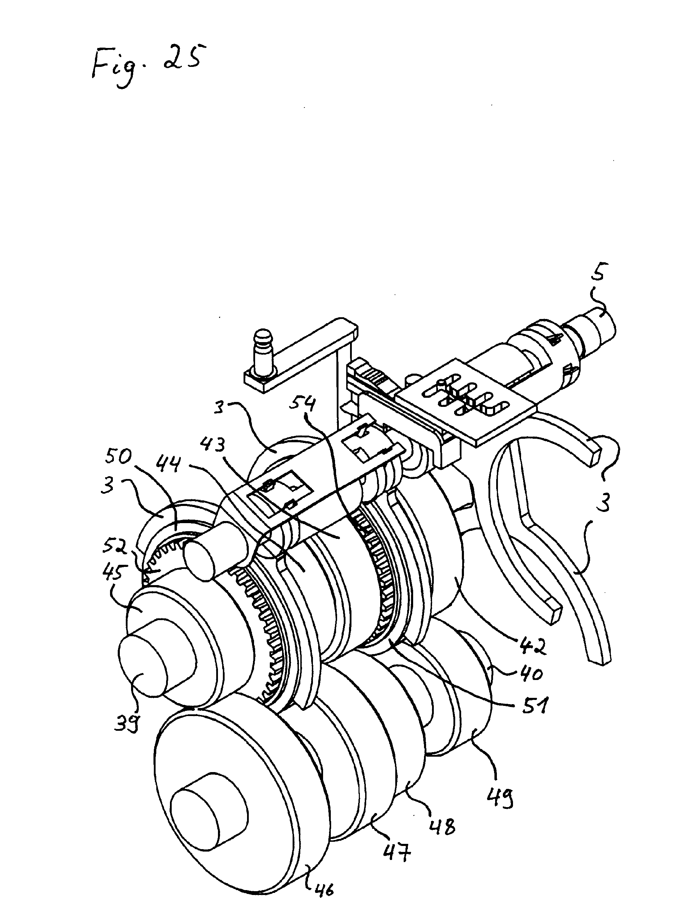

Hierfür sind die entsprechenden Schaltmuffen 50, 51 an Schaltelementen 3 bzw. Schaltarmen gehalten und mittels dieser Schaltelemente 3 einlegbar bzw. auslegbar, wie insbesondere in Fig. 25 exemplarisch dargestellt.

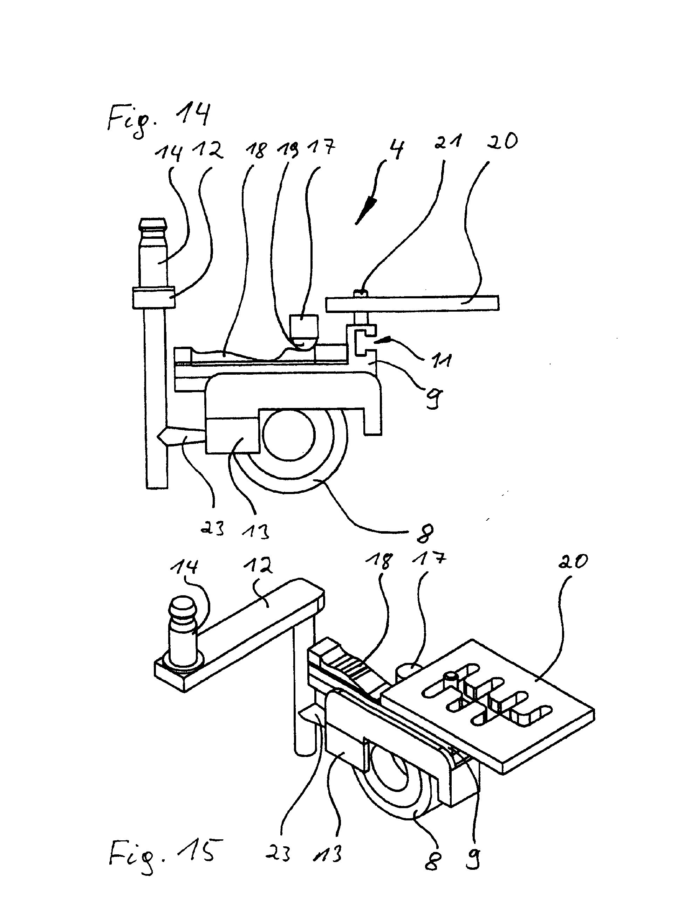

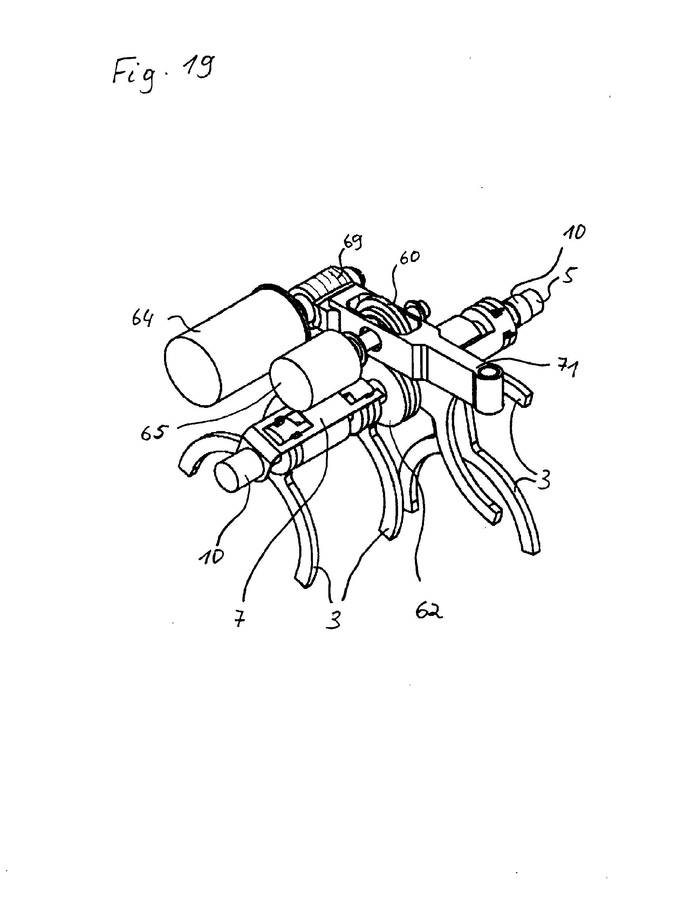

Zum Ein- bzw. Auslegen sind die Schaltelemente 3 über einen Schaltstrang 4 mit einem Schalttrieb, in vorliegendem Ausführungsbeispiel mit einem nicht dargestellten Ganghebel, wirkverbunden. Dieser Schaltstrang 4 umfasst, wie insbesondere aus Figuren 14 und 17 ersichtlich, einerseits einen Hebel 12 und andererseits eine Zahnstange 9, die jeweils über nicht dargestellte Schaltzüge mit dem Schalttrieb in bekannter Weise wirkverbunden sind. Hierfür ist einerseits der Hebel 12 mit einem Ansatz 14 versehen, an welchem ein derartiger Schaltzug angebracht werden kann, während andererseits die Zahnstange 9 eine Ausnehmung 11 aufweist, in welche ein entsprechender Schaltzug eingreifen kann.

Durch Betätigen der Zahnstange 9 kann eine geeignete Gasse 15 (siehe Figur 17) gewählt werden, während der Hebel 12 einem Aus- bzw. Einlegen der zu einer entsprechenden Gasse 15 gehörenden Gänge dient. Aus Gründen der Betriebssicherheit ist eine Schablone 20 an dem Gestell 1 des Schaltgetriebes mit einer Ausnehmung 22 vorgesehen, in welcher ein entsprechender Schablonenstift 21, welcher an der Zahnstange 9 angebracht ist, läuft.

Der Schaltstrang 4 umfasst darüber hinaus ein Zahnrad 8, welches auf einer Schaltwelle 5 angeordnet ist und in die Zahnstange 9 eingreift. Insofern resultiert eine Verlagerung der Zahnstange 9 in einer entsprechenden Drehbewegung der Schaltwelle 5.

Darüber hinaus wird das Zahnrad 8 von einem axialen Antrieb 13 umgriffen, welcher seinerseits die Zahnstange 9 führt. Der axiale Antrieb 13 ist über einen Arm 23 mit dem Hebel 12 wirkverbunden und wird durch den Hebel 12 entlang der Achse der Schaltwelle 5 verlagert. Dadurch, dass der axiale Antrieb 13 das Zahnrad 8 formschlüssig axial bezüglich der Schaltwelle 5 umgreift, folgt die Schaltwelle 5 einer axialen Verlagerung des axialen Antriebs 13.

Die Schaltwelle 5 ist mittels Gleitlager 10 an dem Gestell 1 sowohl hinsichtlich einer Drehbewegung als auch hinsichtlich einer axialen Verlagerung gelagert. Bei vorliegendem Ausführungsbeispiel erfolgt diese Lagerung durch Gleitlager 10, die beispielsweise in einer Lagerbuche 11 des Gestells 1 gelagert sind. Es versteht sich, dass diesbezüglich auch geeignete Wälzlager oder andere Lagerarten zur Anwendung kommen können, zumal eine Verlagerung der Schaltwelle 5 jeweils unter Schaltlast erfolgt, so dass die Lagerung der Schaltwelle 5 von ausreichender Qualität gewählt werden sollte.

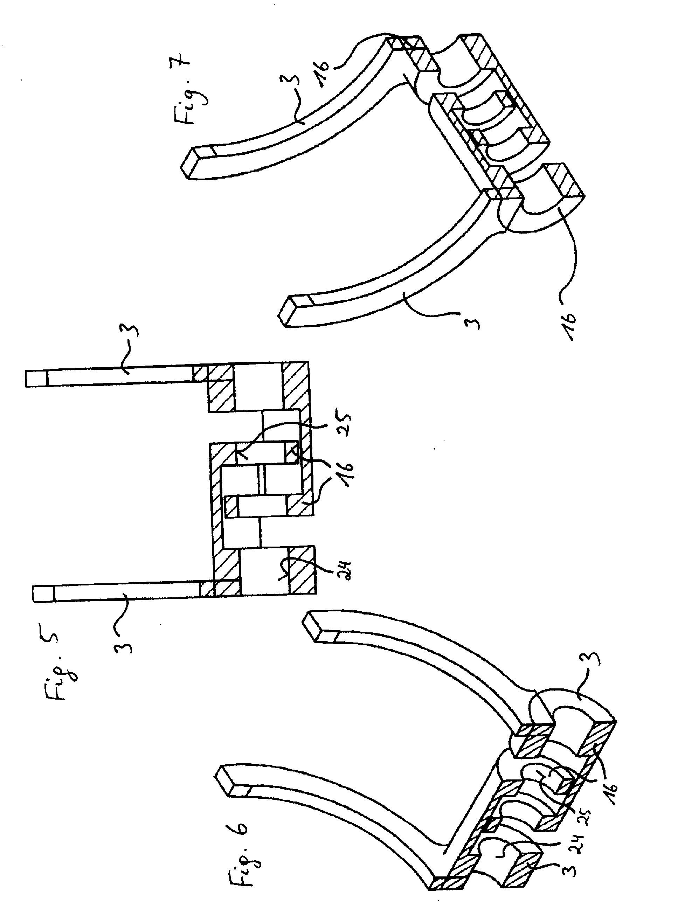

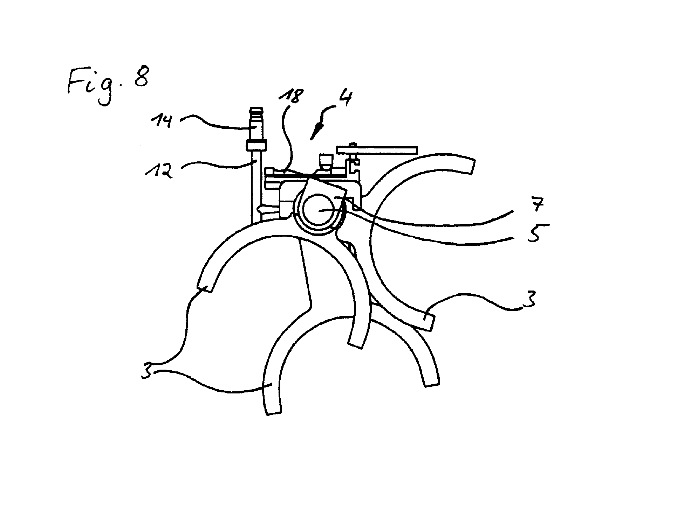

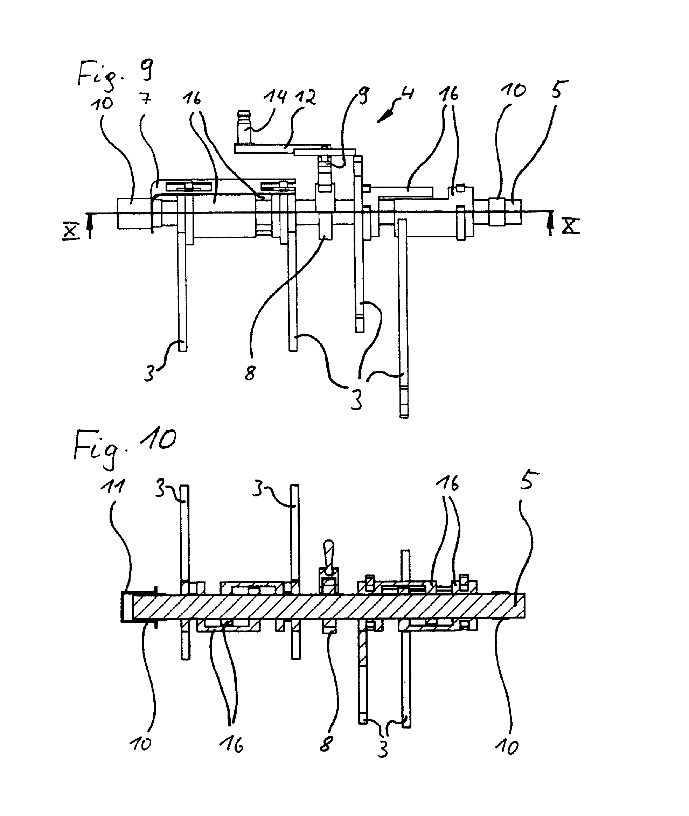

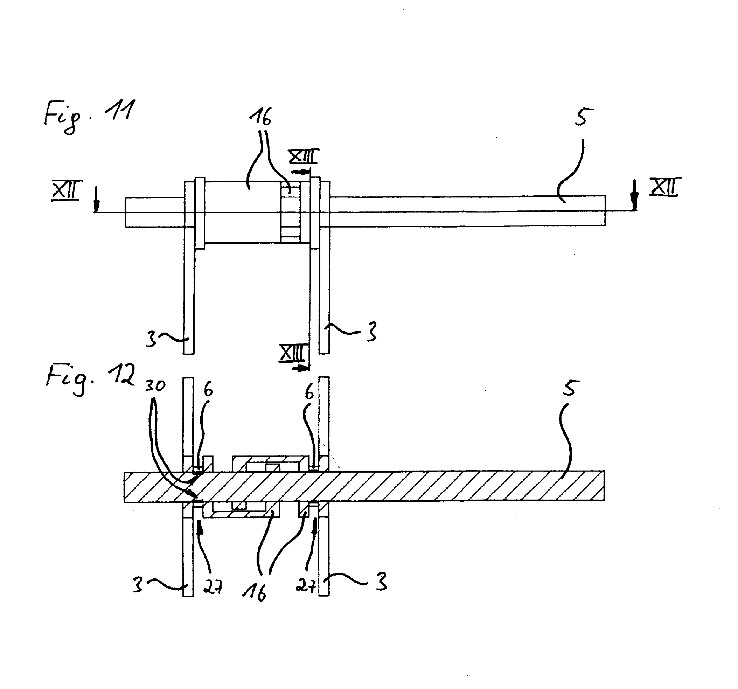

An der Schaltwelle 5 sind die Schaltelemente 3 über Lagerbuchsen 16 (siehe insbesondere Figuren 5 bis 7 und 9 bis 12) gelagert, so dass die Schaltwelle 5 bezüglich der Schaltelemente 3 als Lagerelement dient. Wie unmittelbar ersichtlich, weisen die Lagerbuchsen 16 geteilte Lagerflächen 24 und 25 (exemplarisch in Figuren 5 bis 7 beziffert) auf. Auf diese Weise können die Lagerbuchsen 16 ineinander verschachtelt werden, wodurch die Gesamtlänge der Lagerung steigt und einem Verkanten entgegengewirkt werden kann.

Bei vorliegendem Ausführungsbeispiel sind die Schaltelemente 3 auf einfachste Weise an der Schaltwelle 5 gleitgelagert, da die Schaltelemente 3 lediglich lastfrei bezüglich der Schaltwelle 5 bewegt werden. Je nach Erfordernissen ist es denkbar, auch andere Lagerarten, insbesondere komplexere Lager, wie Wälzlager oder Gleitlager mit speziellen Lagerbuchsen, vorzusehen.

Wie bereits vorstehend erläutert, wird für eine entsprechende Gassenwahl 15 die Schaltwelle rotiert, während sie zum Ein- bzw. Auslegen eines Ganges bzw. Getriebegliedes 2 axial verlagert wird. Hierbei sind bei vorliegendem Ausführungsbeispiel Mittel vorgesehen, über welche jeweils ein Schaltelement 3 ausgewählt und mit der Schaltwelle derart verbunden werden kann, dass das ausgewählte Schaltelement 3 einer Axialbewegung der Schaltwelle 5 folgt. Die jeweilige Auswahl erfolgt hierbei über die Rotation der Schaltwelle 5.

Bei vorliegendem Ausführungsbeispiel dient hierzu ein Federelement 6 als Verbindungselement zwischen der Schaltwelle 5 und jeweils einem Schaltelement 3. Dieses Federelement 6 ist mit dem Schaltelement 3 über eine Nietverbindung 26 unverlierbar verbunden und in einer Nut 27 des Schaltelements 3 angeordnet. Auf diese Weise ist das Federelement 6 und das Verbindungselement zwischen dem Lagerelement 5 und dem Schaltelement 3 axial bezüglich des Schaltelementes 3 festgelegt.

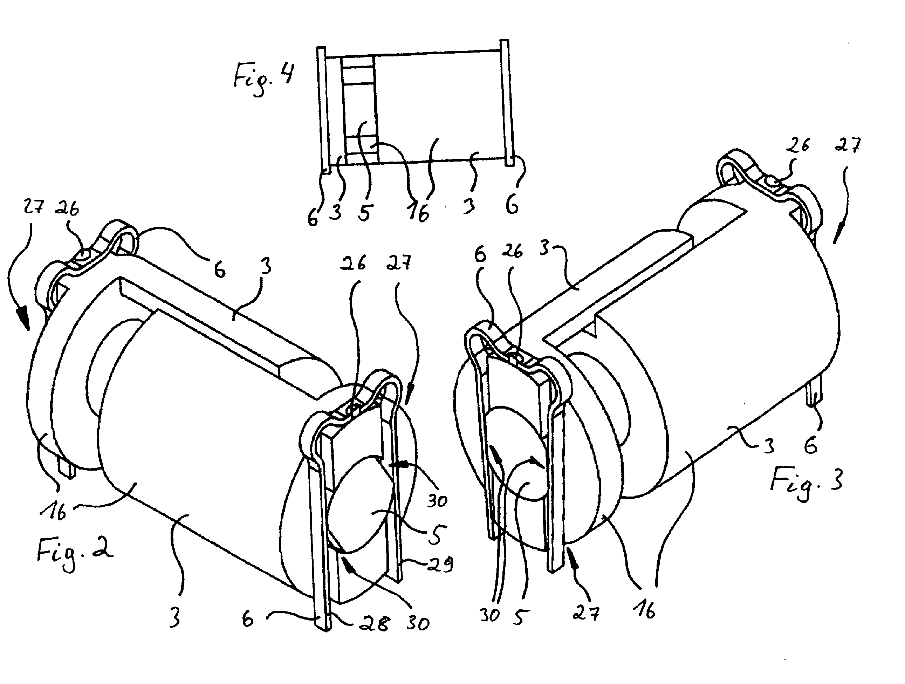

Das Federelement 6 weist jeweils zwei Federarme 28 und 29 (in Figur 2 exemplarisch beziffert) auf, welche die Schaltwelle 5 umgreifen. Entsprechend der Positionen der Federelemente 6 weist die Schaltwelle 5 Nuten 30 (in Figuren 2, 3 und 12 exemplarisch beziffert), in welche je nach Drehlage der Schaltwelle 5 die Federelemente 6 eingreifen können. Hierzu sind die Federelemente 6 mit einer ausreichenden Vorspannung versehen. Wird nunmehr die Schaltwelle 5 rotiert, so greifen die Federelemente 6 sukzessive bei gewählten Drehlagen jeweils in eine korrespondierende Nut 30 der Schaltwelle 5 ein. Es versteht sich, dass auch Ausführungsformen denkbar sind, bei welchen bei einer Drehlage ein Eingriff von mehreren Federelementen in jeweils eine korrespondierende Nut erfolgt. Durch den Eingriff in die Nuten 30 werden die Federelemente 6 jeweils axial mit der Schaltwelle 5 in einen Formschluss gebracht, während die Federelemente 6 ansonsten an der Oberfläche der Schaltwelle 5 entlang gleiten können (siehe Figuren 2 und 3). Insofern können die Federelemente 6 durch Rotation der Schaltwelle 5 in eine Schaltposition gebracht werden, in welcher das jeweilige Schaltelement 3 bezüglich der Schaltwelle 5 fixiert also in axialer Richtung festgelegt ist. Befindet sich das Federelement nicht innerhalb der entsprechenden Nut 30, so kann das Federelement 6 und mit ihm auch das korrespondierende Schaltelement 3 bezüglich der Schaltwelle 5 axial verlagert werden.

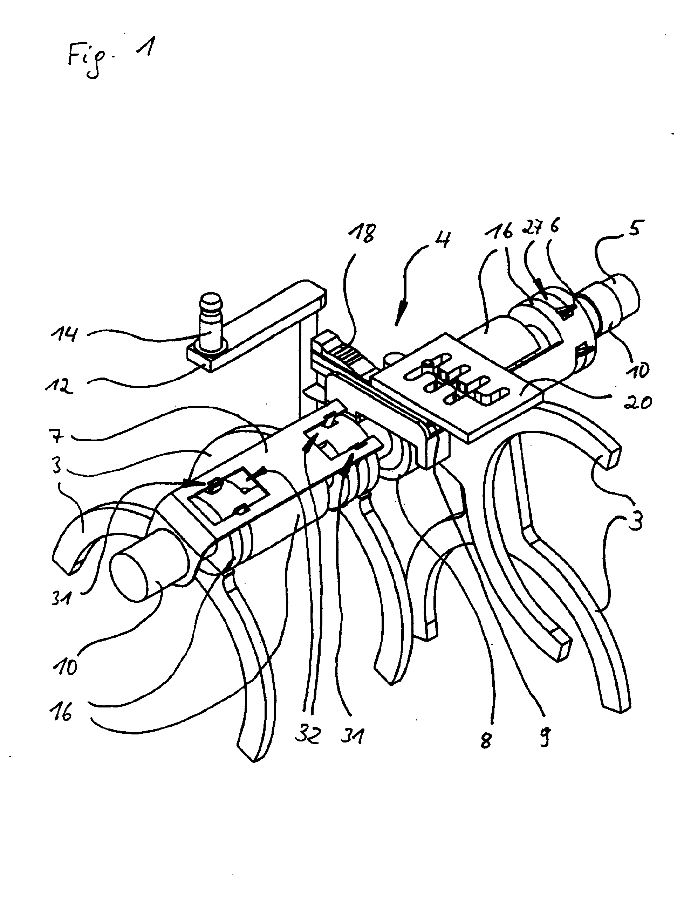

Ortfest bezüglich des Gestells 1 bzw. bezüglich der Lagerbuchse 11 des Gestells 1 ist an dem Gestell 1 ein Bügel 7 als Einlegesperre vorgesehen. Der Bügel 7 weist Nuten 31 (exemplarisch beziffert in Figur 1) auf, die in ihrer axialen Position bezüglich der Schaltwelle 5 den Nuten 30 der Schaltwelle 5 entsprechen. Hierbei sind die Federelemente 6 sowie die korrespondierenden Nuten 30 und 31 derart zueinander angeordnet, dass sich das Federelement 6 je nach Drehlage der Schaltfeder 5 entweder in den Nuten 30 oder in den Nuten 31 befindet. Auf diese Weise kann das jeweilige Federelement 6 durch Rotation der Schaltwelle 5 von einer Schaltposition, in welcher es das Schaltelement 3 bezüglich der Schaltwelle 5 fixiert, in eine Sperrposition, in welcher es das Schaltelement 3 bezüglich des Gestells 1 fixiert gebracht werden. Auf diese Weise ist sichergestellt, dass lediglich die der Drehlage der Schaltwelle 5 entsprechende Schaltelemente 3 axial bezüglich der Schaltwelle 5 festgelegt sind.

Die Bügel 7 weisen darüber hinaus Ausnehmungen 32 auf, die eine axiale Verlagerung der Federelemente 6 ermöglichen, so dass diese einer axialen Verlagerung der Schaltwelle 5 folgen können.

Um die Gegenkräfte des Schaltstranges gegen eine Gassenwahl geeignet und benutzerfreundlich zu beeinflussen, ist an der Zahnstange 9 eine Kulisse 18 vorgesehen, gegen welche ein Kulissenfolger 19 mittels einer Feder 17 gedrückt wird. Die Feder 17 dient hierbei als Kraftspeicher, welcher Energie bzw. Arbeit je nach Lage der Kulisse im Schaltstrang entzieht oder in diesen einspeist. Auf diese Weise können beispielsweise eine Ruhelage eines entsprechenden Schalthebels sowie ein gewünschtes Kraftprofil beim Betätigen des Schalthebels, insbesondere bei der Gassenwahl, geeignet gewählt bzw. korrigiert werden.

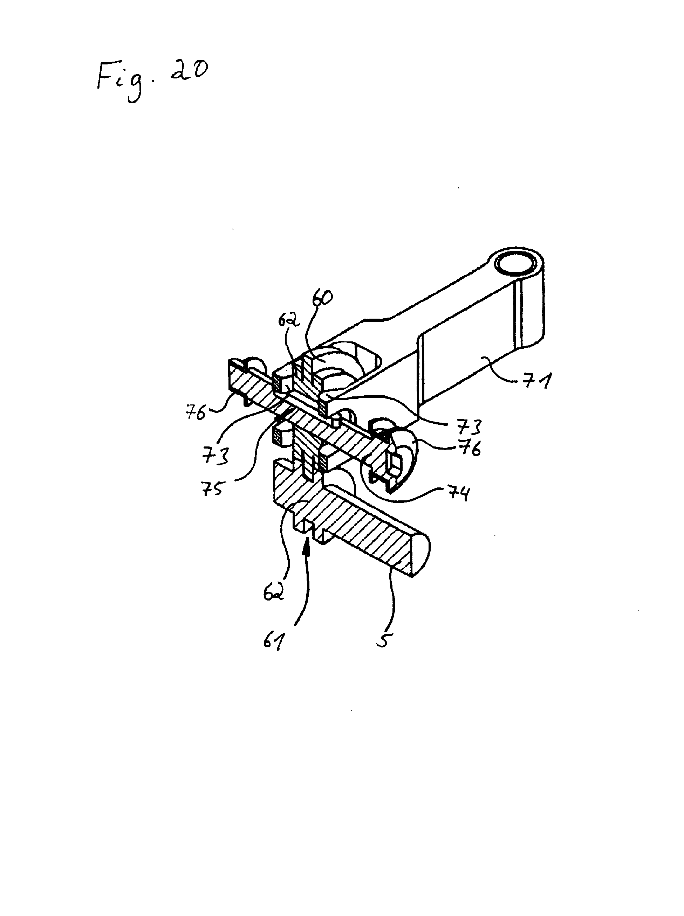

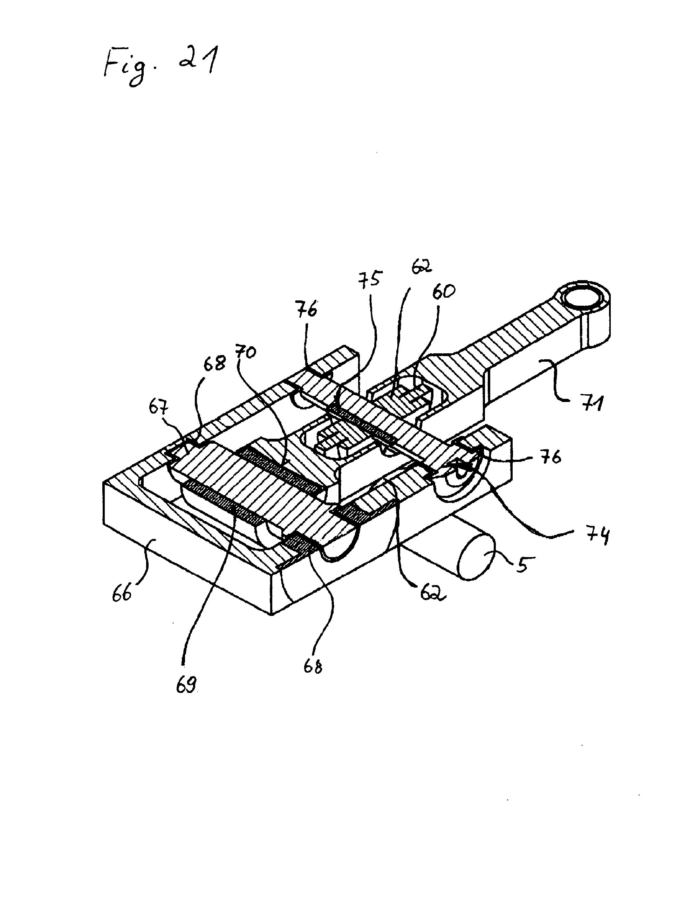

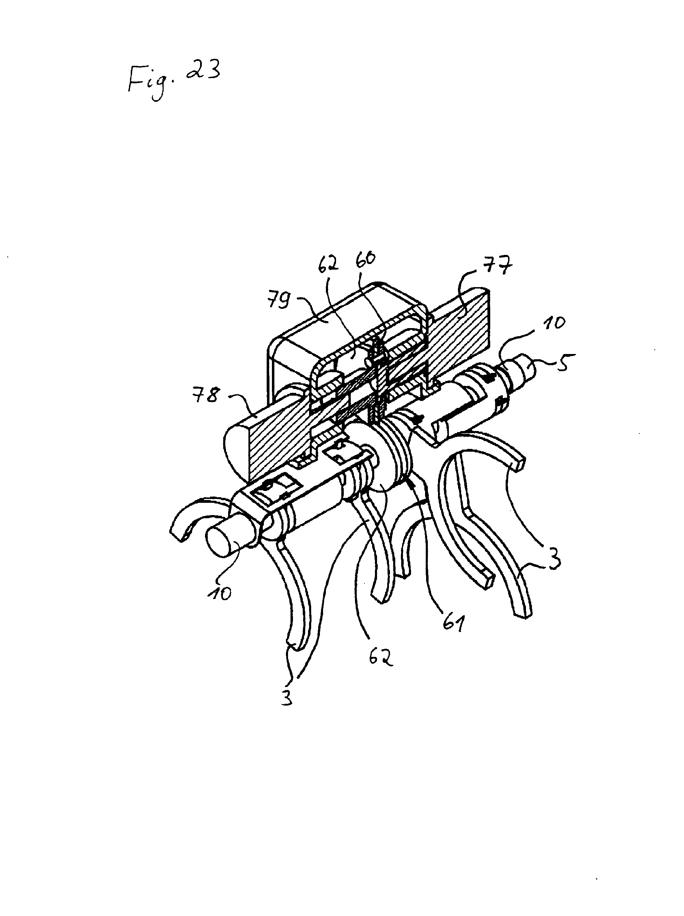

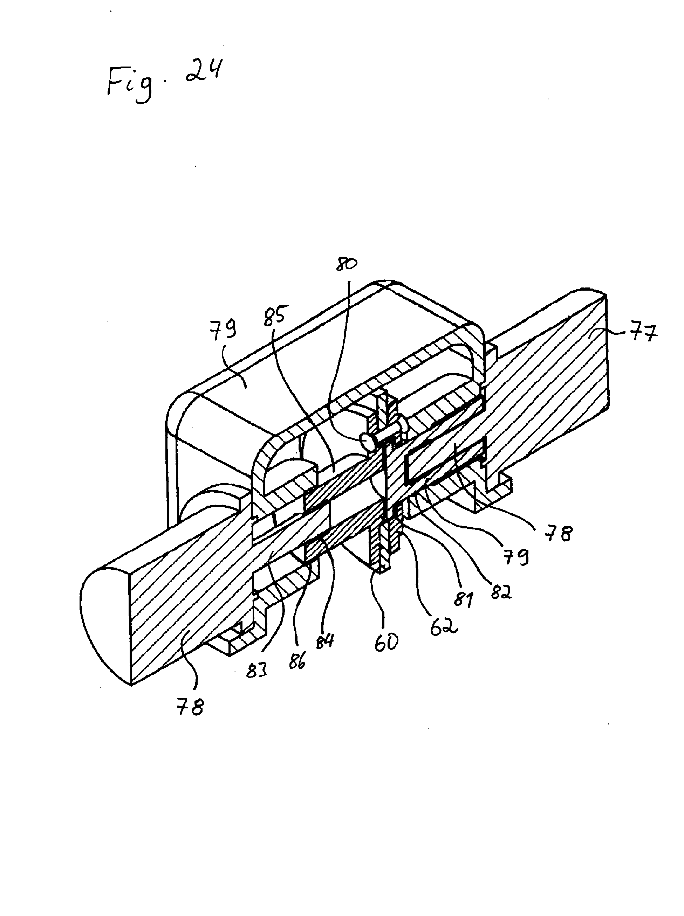

Die in Figuren 18 bis 24 offenbarten Getriebe entsprechen hinsichtlich ihrer Schaltgabeln 3 und ihrer Schaltwelle 5 dem zuvor beschriebenen Ausführungsbeispiel. Lediglich die Ansteuerung ist automatisiert. Des weiteren ist der Formschluss im Bereich des Zahnrades bzw. der Antrieb der Schaltwelle 5 abweichend realisiert.

Insofern greift bei diesen Ausführungsbeispielen eine Scheibe 60 permanent in eine Nut 61 eines Zahnrades 62 ein, welches auf der Schaltwelle 5 festgelegt bzw. einstückig mit dieser ausgebildet ist. Die Scheibe 60 ist ebenfalls in ein Zahnrad 63 eingebettet, welches einerseits axial verlagerbar und andererseits drehbar gelagert ist.

Bei dem in Figuren 18 bis 21 dargestellten Ausführungsbeispiel sind Aktuatoren 64 und 65, die vorzugsweise Elektromotoren sind aber auch hydraulische, pneumatische oder sonstige Verstelleinheiten sein können, an einem Gestell 66 festgelegt. Bei diesem Ausführungsbeispiel treibt der Aktuator 64 über eine Aktuatorwelle 67, welche in Aktuatorlagern 68 gelagert ist, ein Gewinde 69 an, welches beispielsweise auch als Schneckenrad ausgestaltet sein kann, und versetzt es in eine Rotationsbewegung bzw. legt dieses in einer bestimmten Position fest. Ein Gegengewinde 70, welches fest mit einer Schwenkgabel 71 verbunden ist, die um einen Bolzen 72 des Gestells 66 schwenkbar ist, greift in das Gewinde 69 ein. Hierdurch wird die Schwenkbewegung der Schwenkgabel 71 um den Bolzen 72 in eine Schiebebewegung der Gabelnasen 73 auf die Scheibe 60 umgewandelt und es kann hierdurch ein Gang ein- bzw. ausgelegt werden.

Zum Gassenwechsel dient der Aktuator 65, welcher über eine Aktuatorwelle 74, auf welcher eine axiale Verzahnung 75, beispielsweise eine Splineverzahnung oder eine Nut-Feder-Verbindung, vorgesehen ist, das Zahnrad 62, welches axial verschiebbar auf der Aktuatorwelle 74 angeordnet ist, antreibt. Die Aktuatorwelle ist über Aktuatorlager 76 an dem Gestell 66 gelagert. Dadurch, dass das Zahnrad 62 permanent mit dem Zahnrad 62 in Eingriff ist kann durch Rotation der Schaltwelle 5 ein Gassenwechsel vorgenommen werden.

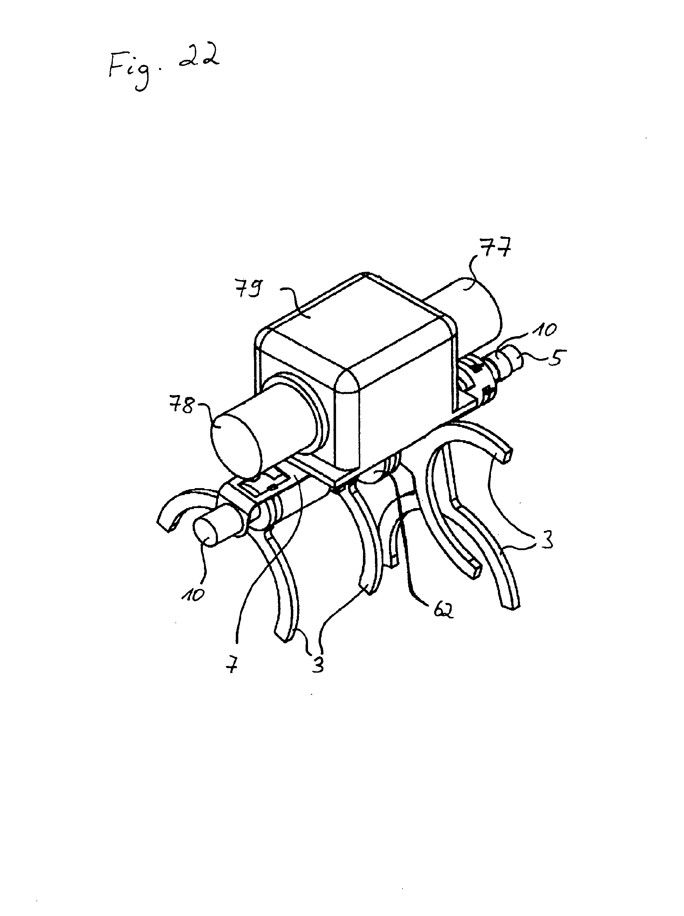

Bei dem in Figuren 22 bis 24 dargestellten Ausführungsbeispiel sind Aktuatoren 77 und 78 im wesentlichen koaxial an einem Gestell bzw. Gehäuse 79 angeordnet. Der Aktuator 77 schiebt über seine Aktuatorachse 78, auf welcher sich ein Gewinde befindet, einen Flansch 79 axial hin und her bzw. legt diesen in einer gewünschten Position fest. Bei diesem Ausführungsbeispiel ist die Scheibe 60 über Nieten 80 oder ähnliche Befestigungsmittel mit dem Zahnrad 62 verbunden, welches auch den Flansch 79 umgreift und axial festlegt. Hierbei ist der Flansch 79 über ein Lager 81 einerseits an dem Zahnrad 62 bzw. der Scheibe 60 drehbar und über ein Lager 82 andererseits an dem Gestell 79 axial verlagerbar gelagert. Um einen Gangwechsel durchzuführen, greift auch bei diesem Ausführungsbeispiel die Scheibe 60 permanent in die Nut 61 ein.

Zum Gassenwechsel ist der Aktuator 78 in der Lage, das Zahnrad 62 zu drehen, welches mit dem Zahnrad 62 permanent verzahnt ist. Hierbei ist eine Aktuatorachse 83 über eine axial wirksame Verzahnung 84, wie eine Splineverzahnung, axial verschiebbar an einem Flansch 85 gelagert, der bei diesem Ausführungsbeispiel einstückig mit dem Zahnrad 62 ausgebildet ist. Der Flansch 85 ist an einem Lager 86 sowohl axial als auch drehbar an dem Gestell 79 gelagert. Die Lager 81 und 82 können als Gleit- oder Wälzlager ausgebildet sein. Selbiges gilt für die Lager 84 und 86 die als Gleitlager oder als Lager mit Wälzkörpern oder ähnlichen Gleithilfseinrichtungen ausgestaltet sein können.

## Patentansprüche

1. Schaltgetriebe mit einem schaltbaren Getriebestrang aus an einem Gestell (1) gelagerten Getriebegliedern (2) und mit einem Schalttrieb, durch welchen zum Schalten wenigstens zwei Getriebeglieder wahlweise in den Getriebestrang einbringbar sind, wobei die beiden Getriebeglieder über Schaltelemente (3) beweglich an einer Halterung des Gestells (1) gelagert sind und wobei der Schalttrieb über einen Schaltstrang (4) zum Auswählen und/oder Ein- bzw. Auslegen eines der beiden Getriebeglieder auf die Schaltelemente (3) wirkt, ***dadurch gekennzeichnet*, *dass*** die Halterung ein gegenüber dem Gestell (1) beweglich angeordnetes Lagerelement (5) umfasst, welches Bestandteil des Schaltstranges (4) ist.

2. Schaltgetriebe nach Anspruch 1, ***dadurch gekennzeichnet*, *dass*** ein schaltendes Schaltelemente (3) und das Lagerelement (5) gemeinsam bewegt werden, wenn ein Schaltvorgang mit dem zu schaltenden Schaltelement (3) vorgenommen wird.

3. Schaltgetriebe nach Anspruch 1 oder 2, ***gekennzeichnet durch*** wenigstens ein Verbindungselement zwischen dem Lagerelement (5) und einem Schaltelement (3), welches in wenigstens zwei Positionen, in eine erste Schaltposition, in welcher es das Schaltelement (3) bezüglich des Lagerelements (5) fixiert und bezüglich des Gestells (1) freigibt, und in eine zweite Sperrposition, in welcher es das Schaltelement (3) bezüglich des Lagerelements (5) freigibt und bezüglich des Gestells (1) fixiert, verlagerbar ist.

4. Schaltgetriebe nach Anspruch 3, ***dadurch gekennzeichnet*, *dass*** das Verbindungselement durch das Lagerelement (5) als Bestandteil des Schaltstranges (4) zwischen Schaltposition und Sperrposition verlagerbar ist.

5. Schaltgetriebe nach Anspruch 4, ***dadurch gekennzeichnet, dass*** das Verbindungselement ein Federelement (6) ist, welches durch das Lagerelement (5) in die Schaltposition und in die Sperrposition verlagerbar ist.

6. Schaltgetriebe nach einem der Ansprüche 3 bis *5,* ***dadurch gekennzeichnet, dass*** das Verbindungselement an dem Schaltelement (3) befestigt ist.

7. Schaltgetriebe nach einem der Ansprüche 3 bis 6, ***dadurch gekennzeichnet*, *dass*** in der Sperrposition das Verbindungselement das Schaltelement (3) gegenüber einer bezüglich des Gestells (1) ortsfesten Einbausperre fixiert.

8. Schaltgetriebe mit einem schaltbaren Getriebestrang aus an einem Gestell (1) gelagerten Getriebegliedern (2) und mit einem Schalttrieb, durch welchen zum Schalten wenigstens zwei Getriebeglieder wahlweise in den Getriebestrang einbringbar sind, wobei die beiden Getriebeglieder über Schaltelemente (3) beweglich an einer Halterung des Gestells (1) gelagert sind und wobei der Schalttrieb über einen Schaltstrang (4) zum Auswählen und/oder Ein- bzw. Auslegen eines der beiden Getriebeglieder auf die Schaltelemente (3) wirkt und eine Einlegesperre vorgesehen ist, die ein nicht ausgewähltes Schaltelement (3) bezüglich des Gestells fixiert, vorzugsweise nach einem der Ansprüche 1 bis 7, ***dadurch gekennzeichnet*, *dass*** die Einlegesperre fest an dem Gestell (1) angebracht ist.

9. Schaltgetriebe nach Anspruch 7 oder 8, ***dadurch gekennzeichnet, dass*** die Einlegesperre ein an dem Gestell (1) angebrachter Bügel (7) ist.

10. Schaltgetriebe nach einem der Ansprüche 1 bis 9, ***dadurch gekennzeichnet*, *dass*** das Lagerelement (5) eine Schaltwelle ist.

11. Schaltgetriebe nach Anspruch 10, ***dadurch gekennzeichnet*, *dass*** die Schaltwelle über ein Gleitlager (10) an dem Gestell (1) bzw. an einer Lagerbuchse (11) des Gestells (1) gelagert ist.

12. Schaltgetriebe nach Anspruch 10 oder 11, ***dadurch gekennzeichnet, dass*** die Schaltwelle zum Betätigen eines Schaltelements (3), vorzugsweise über einen Formschluss, axial mit dem jeweiligen Schaltelement (3) verbunden wird.

13. Schaltgetriebe nach einem der Ansprüche 10 bis 12, ***dadurch gekennzeichnet*, *dass*** die Schaltwelle, vorzugsweise für eine Gassenwahl (15), mit dem Schalttrieb drehantriebsverbunden ist.

14. Schaltgetriebe nach Anspruch 13, ***dadurch gekennzeichnet, dass*** die Schaltwelle ein Antriebsrad, vorzugsweise ein Zahnrad (8), umfasst, welches von dem Schalttrieb angetrieben ist.

15. Schaltgetriebe nach Anspruch 13 oder *14,* ***dadurch gekennzeichnet, dass*** der Schaltstrang (4) eine Zahnstange (9) umfasst, welche mit einem Zahnrad (8) wirkverbunden ist.

16. Schaltgetriebe nach Anspruch 15, ***dadurch gekennzeichnet*, *dass*** die Zahnstange (9) über einen Schaltzug, der vorzugsweise in eine Ausnehmung (11) oder ähnliches der Zahnstange (9) eingreift, mit dem Schalttrieb wirkverbunden ist.

17. Schaltgetriebe nach einem der Ansprüche 10 bis 16, **dadurch gekennzeichnet, dass** die Schaltwelle, vorzugsweise zum Einlegen oder Auslegen eines Getriebegliedes (2), über den Schalttrieb axial verlagerbar ist.

18. Schaltgetriebe nach Anspruch 17, ***dadurch gekennzeichnet, dass*** der Schaltstrang (4) einen Hebel (12) umfasst, der in einen axialen Antrieb (13) für die Schaltwelle eingreift.

19. Schaltgetriebe nach Anspruch 18, ***dadurch gekennzeichnet, dass*** der axiale Antrieb (13) einen axialen Formschluss zwischen der Schaltwelle und dem Hebel (12) umfasst.

20. Schaltgetriebe nach Anspruch 19, ***dadurch gekennzeichnet, dass*** eine Zahnstange (9) des Schaltstrangs (4), in welche der Hebel (12) eingreift, ein Zahnrad (8) der Schaltwelle zur Bildung des axialen Formschlusses axial bezüglich der Schaltwelle umgreift.

21. Schaltgetriebe nach einem der Ansprüche 18 bis 20, ***dadurch gekennzeichnet*, *dass*** der Hebel (12) über einen Ansatz (14) mit dem Schalttrieb, vorzugsweise mittels eines Schaltzuges, antriebsverbunden ist.

22. Schaltgetriebe nach einem der Ansprüche 1 bis 21, ***dadurch gekennzeichnet*, *dass*** der Schaltstrang (4) mit einer Einrichtung zur Variation von Reaktionskräften in dem Schaltrieb wirkverbunden ist.

23. Schaltgetriebe nach Anspruch 22, ***dadurch gekennzeichnet*, *dass*** die Variationseinrichtung einen in Abhängigkeit von einer Position des Schalttriebs, vorzugsweise in Abhängigkeit von einer Gassenwahl (15), angesteuerten Kraftspeicher umfasst.

24. Schaltgetriebe nach Anspruch 23, ***dadurch gekennzeichnet, dass*** der Kraftspeicher ein federelastisches Element (17) umfasst.

25. Schaltgetriebe nach einem der Ansprüche 22 bis 24, ***dadurch gekennzeichnet*, *dass*** die Variationseinrichtung eine Kulisse (18) und einen Kulissenfolger (19) umfasst.

26. Schaltgetriebe nach Anspruch 25, ***dadurch gekennzeichnet*, *dass*** die Kulisse (18) an einer Zahnstange (9) des Schaltstranges (4) und der Kulissenfolger (19) an dem Gestell (1) vorgesehen ist.

27. Schaltgetriebe nach Anspruch 25, ***dadurch gekennzeichnet, dass*** der Kulissenfolger (19) an einer Zahnstange (9) des Schaltstranges (4) und die Kulisse (18) an dem Gestell (1) vorgesehen ist.

28. Schaltgetriebe mit einem schaltbaren Getriebestrang aus an einem Gestell (1) gelagerten Getriebegliedern (2) und mit einem Schalttrieb, durch welchen zum Schalten wenigstens zwei Getriebeglieder wahlweise in den Getriebestrang einbringbar sind, wobei die beiden Getriebeglieder über Schaltelemente (3) axial beweglich an einer Halterung des Gestells (1) gelagert sind und wobei der Schalttrieb über einen Schaltstrang (4) zum Auswählen und/oder Ein- bzw. Auslegen eines der beiden Getriebeglieder auf die Schaltelemente (3) wirkt, vorzugsweise nach einem der Ansprüche 1 bis 27, ***dadurch gekenn*** ***zeichnet*, *dass*** die Schaltelemente über einen axial geteilten Lagerkörper, wie eine Lagerbuchse (16), an der Halterung gelagert sind.

29. Schaltgetriebe nach Anspruch 28, ***dadurch gekennzeichnet*, *dass*** von wenigstens zwei Schaltelementen (3) die Lagerkörper (16) ineinander verschachtelt angeordnet sind.

30. Schaltgetriebe nach einem der Ansprüche 1 bis 29, ***dadurch gekennzeichnet, dass*** wenigstens ein Schaltelement (3) über ein Gleitlager an der Halterung bzw. an einem Lagerelement (5) gelagert ist.

31. Schaltgetriebe nach einem der Ansprüche 1 bis 30, ***dadurch gekennzeichnet*, *dass*** wenigstens zwei Schaltelemente (3) an einem Lagerelement (5) gelagert sind.
